# EUROPEAN PATENT SPECIFICATION

(11) **EP 3 307 120 B1**
(45) Date of publication and mention of the grant of the patent: **12.02.2020**
(21) Application number: 16807975.4
(22) Date of filing: 04.05.2016
(51) Int. Cl.: A47J 37/04, A21B 1/26, A21B 1/50, A21B 3/02, A21B 3/04, F27B 9/10, F24C 15/16, F24C 15/00, F24C 15/32

(54) **COOKING OVEN**
BACKOFEN
FOUR DE CUISSON

(30) Priority: 08.06.2015 US 201514733533; 04.02.2016 US 201615016093
(43) Date of publication of application: 18.04.2018
(73) Proprietor: Alto-Shaam, Inc., Menomonee Falls, WI 53052 (US)
(72) Inventor: MCKEE, Philip, R., Frisco, TX 75034 (US); VANLANEN, Lee, Thomas, Mckinney, TX 75069 (US); COLEMAN, Todd, Farmers Branch, TX 75243 (US)
(74) Representative: J A Kemp LLP
(86) International application number: PCT/US2016/030736
(87) International publication number: WO 2016/200513

(56) References cited:
- WO-A1-00/64219
- DE-A1-102011 079 576
- JP-A- S63 172 837
- US-A- 4 455 478
- US-A- 4 626 661
- US-A- 5 676 044
- US-B1- 6 320 165
- US-B1- 6 595 117
- US-B2- 6 576 874

## Description

### FIELD OF THE INVENTION

The present invention relates to a convection oven having removable air plenums.

### BACKGROUND OF THE INVENTION

An oven generally includes an oven cavity configured to receive food articles for cooking. The oven also includes a heating element, which can be an electric resistance element or a gas burner, for generating heat energy to cook any food items placed within an oven cavity. Some ovens may include a fan for forcing movement of heated air within the oven cavity, and those ovens are commonly referred to as convection ovens.

Convection ovens have been the workhorse in commercial kitchens for many decades. Commercial convection ovens generally come in two sizes, namely, full-size and half-size. Full-sized commercial convection ovens are designed to fit within the space of an industry standard footprint, which is approximately 40 inches wide by 40 inches deep, made available for full-sized convection ovens in most commercial kitchens. The oven cavity of full-sized commercial ovens are also dimensioned to accept industry standard full-sized cooking trays, which are approximately 26 inches wide by 18 inches deep. The height of the cook cavity is typically about 20 inches, which is capable of being configured to allow for multiple rack heights, such as 11 possible rack heights, to accommodate the height of various foods that can be cooked in a convection oven. For example, only 2 racks may be placed in a commercial convection oven if 9-inch tall turkeys are being cooked, but 4 to 5 racks may be evenly spaced from top to bottom when that many racks of 2-inch tall lasagna are being cooked. Half-sized commercial convection ovens are similarly configured and dimensioned to fit into industry standard half-sized spaces in commercial kitchens and to receive industry standard half-sized sheet pans.

When cooking in a typical convection oven, heated air within the oven cavity is circulated by a fan. The fan initiates a flow of heated air by pulling air from the oven cavity through multiple openings on a back wall of the oven cavity. The heated air then exits other openings on the side walls of the oven cavity. The heated air moves through the oven cavity to help distribute heat energy to food articles placed within the oven cavity. An example of the heating system of a typical convection oven can be found in U.S. Patent No. 4,395,233 to Smith et al.

One problem with the heating system of a conventional convection oven is that it can generate regions of high and low speed air flow in the oven cavity such that the heated air is not uniformly distributed within the oven cavity. As a result, food items placed in the oven cavity may be cooked unevenly. For example, food items placed on different racks at different heights within the convection oven may be cooked at different rates. In addition, food items placed on the same rack may not receive uniform heating either. This unevenness of cooking can result in food waste, as food items located in the higher heat portions of the oven cavity can be unacceptably overdone as compared to the food items located in the lower heat portions. Unevenness of cooking can be partially overcome by rotating cook trays within the oven cavity, as well as utilizing reduced cooking temperatures and blower speeds, but doing so will increase skilled labor requirements as well as cook times.

DE 10 2011 079576, US 4,455,478, JP S63-172837 and WO 00/64219 each disclose ovens.

Conventional convection ovens have other problems as well. For example, only one cook temperature and heat transfer profile, such as blower speed, can be delivered in a conventional convection oven at any one time, thereby limiting the types of foods that can be cooked simultaneously. This can be overcome by having multiple convection ovens set at different cook temperatures and heat transfer profiles, but doing so will result in space and energy inefficiency.

Consequently, it would be desirable to provide an improved convection oven that can eliminate the above-mentioned problems.

### SUMMARY OF THE INVENTION

It has now been found that the above and related objects of the present invention are obtained in the form of several related aspects, including a convection oven having removable air plenums. The invention is defined in the claims.

In accordance with the present disclosure, a convection oven has one or more removable air plenums that can be placed within the oven cavity to divide the cavity into separate cooking chambers. Removable air plenums are connectable to and engageable with air channels of the oven. Each removable air plenum includes an air intake edge for receiving heated air from the engaged air channel in the oven and a plurality of air vents for directing the heated air into the corresponding cooking chamber for the purpose of heating any food items located within the cooking chamber. When a removable air plenum is disengaged from the oven air channel and removed from the oven cavity, the air channel may be covered by a movable flap.

By placing, removing, or re-arranging removable air plenums within the oven cavity, one can arrange to have different number of cooking chambers with variable heights in the convection oven to meet multiple cooking needs simultaneously. The oven may be provided with a control panel that can control each cooking chamber independently.

The oven may have one or two oven doors for accessing all of the cooking chambers. In other words, the size of the oven door(s) is not necessarily dependent on the height of cooking chambers defined by the removable air plenums.

The oven may also have a sensor for detecting the opening of oven doors during a cook cycle. To compensate for any disruption to the cook cycle due to the opened oven door, the oven's controller may extend the cooking time(s) or re-adjust cooking parameters for the cooking chamber(s) based on the measured amount of time the oven doors were kept open during their respective cook cycles.

The present disclosure also relates to a convection oven comprising a housing having an oven cavity and an oven door for access to the oven cavity, at least one air blower for generating heated air, one or more air channels for directing the heated air from the air blower toward the oven cavity, and one or more removable air plenums, wherein each of the one or more removable air plenums is connected to one of the one or more air channels; comprises an air intake edge for receiving the heated air from the one of the one or more air channels; defines the top or the bottom of a cooking chamber within the oven cavity; and comprises a plurality of air vents for directing the heated air into the cooking chamber.

In at least one embodiment, at least one of the one or more air channels is coverable by a flap if not connected to one of the one or more removable air plenums.

In at least one embodiment, at least one of the one or more removable air plenums comprises a tab configured to open the flap when connected to one of the one or more air channels.

In at least one embodiment, the convection oven further comprises a control panel for separately and independently controlling each of the cooking chambers defined by the one or more removable air plenums.

In at least one embodiment, the convection oven further comprises a sensor for detecting the oven door being kept open during a cook cycle.

In at least one embodiment, the convection oven further comprises a controller for re-adjusting a cooking parameter for at least one of the cooking chambers defined by the one or more removable air plenums based on the amount of time the oven door is kept open during the cook cycle.

In at least one embodiment, at least one of the one or more removable air plenums is configured to support a food rack within the corresponding cooking chamber.

The present disclosure also relates to a cooking oven comprising a housing having an oven cavity and an oven door for access to the oven cavity, an upper air channel, a lower air channel, a removable plenum pair defining the bottom of an upper cooking chamber and the top of a lower cooking chamber in the oven cavity, the plenum pair comprising an upper air plenum removably connected to the upper air channel, the upper air plenum comprising an air intake edge configured to receive air flow from the upper air channel and a plurality of air vents configured to direct the air flow upwards into the upper cooking chamber, and a lower air plenum removably connected to the lower air channel, the lower air plenum comprising an air intake edge configured to receive air flow from the lower air channel and a plurality of air vents configured to direct the air flow downwards into the lower cooking chamber, and an air blower configured to send heated air to the upper air channel and the lower air channel.

According to the invention, the air blower comprises an upper air blower configured to send heated air toward the upper cooking chamber, and a lower air blower configured to send heated air toward the lower cooking chamber.

In at least one embodiment, the cooking oven further comprises an upper air diverter positioned in front of an outlet of the upper air blower and configured to direct a portion of the heated air from the upper air blower into the upper air plenum through the upper air channel, and a lower air diverter positioned in front of an outlet of the lower air blower and configured to direct a portion of the heated air from the lower air blower into the lower air plenum through the lower air channel.

In at least one embodiment, at least one of the upper air diverter and the lower air diverter comprises two substantially identical planar elements joined along a side nearest to the outlet of the corresponding one of the upper air blower and the lower air blower at an angle to form a substantially symmetrical ">" shape when viewed from the side.

In at least one embodiment, the tip of the ">" shaped air diverter points to the vertical center of the outlet of the corresponding one of the upper air blower and the lower air blower.

In at least one embodiment, the distance between the nearest side of the ">" shaped air diverter and the outlet of the corresponding one of the upper air blower and the lower air blower is substantially 2.4 inches.

In at least one embodiment, the angle between the two planar elements is fixed.

In at least one embodiment, the angle between the two planar elements is between 45 degrees and 90 degrees.

In at least one embodiment, the angle between the two planar elements is between 55 degrees and 80 degrees.

In at least one embodiment, the angle between the two planar elements is between 65 degrees and 70 degrees.

In at least one embodiment, the angle between the two planar elements is adjustable.

In at least one embodiment, each of the two planar elements is substantially in the shape of an isosceles trapezoid.

In at least one embodiment, the distance between the upper air diverter and the outlet of the upper air blower is adjustable.

In at least one embodiment, the distance between the lower air diverter and the outlet of the lower air blower is adjustable.

In at least one embodiment, at least one of the upper air plenum and the lower air plenum comprises a first surface and a second surface opposite to the first surface, the first surface comprising a flat planar surface having the plurality of air vents and the second surface being slanted toward the first surface so that the vertical spacing between the first surface and the second surface at the air intake edge of the air plenum is greater than the vertical spacing between the first surface and the second surface at a distal end of the air plenum.

In at least one embodiment, the vertical spacing between the first surface and the second surface at the air intake edge of the air plenum is substantially one inch.

In at least one embodiment, the second surface is slanted at a greater angle at the air intake edge than at near the distal end.

In at least one embodiment, the second surface comprises at least two planar elements which are slanted toward the first surface at different angles.

In at least one embodiment, the second surface is slanted at 4.5 degrees at the air intake edge and at 1.0 degree at near the distal end.

In at least one embodiment, the upper air channel and the lower air channel are located on a back wall of the oven cavity.

In at least one embodiment, each of the upper air channel and the lower air channel is coverable by a flap if not connected to the corresponding one of the upper air plenum and the lower air plenum.

In at least one embodiment, each of the upper air plenum and the lower air plenum comprises a tab configured to open the flap when connected to the corresponding one of the upper air channel and the lower air channel.

In at least one embodiment, the removable plenum pair further comprises a tab to ensure that each of the upper air plenum and the lower air plenum is sealed to the corresponding air channel. The tab is configured and positioned in the removable plenum pair in such a way that when the oven doors close, the metal edge of the door frame strikes the tab if each of the upper air plenum and the lower air plenum in the plenum pair is not pushed all the way against the corresponding air channel on the back wall.

In at least one embodiment, the cooking oven further comprises a control panel for separately and independently controlling the upper cooking chamber and the lower cooking chamber.

In at least one embodiment, the cooking oven further comprises a controller for re-adjusting a cooking parameter for at least one of the upper cooking chamber and the lower cooking chamber based on the amount of time the oven door is kept open during the cook cycle.

In at least one embodiment, the upper air plenum is configured to support a food rack for the upper cooking chamber.

In at least one embodiment, the cooking oven further comprises return air openings on left and right side walls of the oven cavity.

In at least one embodiment, the cooking oven further comprises an upper moveable flap for covering the upper air channel, a lower moveable flap for covering the lower air channel, a rod, and a flange attached to the rod at a front end and coupled to the upper moveable flap and the lower moveable flap at a back end via one or more pivots, wherein the rod and the flange form a moveable assembly which is capable of pulling the upper moveable flap and the lower moveable flap over the upper air channel and the lower air channel and pushing the upper moveable flap and the lower moveable flap away from the upper air channel and the lower air channel by moving back and forth, respectively.

These and other features and advantages of the present invention will become apparent in the following detailed written description of various exemplary embodiments of this invention.

### BRIEF DESCRIPTION OF THE DRAWINGS

The invention itself, as well as a preferred mode of use, further objects, and advantages thereof, will best be understood by reference to the following detailed description of illustrative and exemplary embodiments when read in conjunction with the accompanying drawings, wherein:
FIG. **1** is an isometric view of a convection oven, in accordance with an exemplary embodiment of the present invention;
FIG. **2A** is a front view of an oven cavity within the convection oven from Figure 1, in accordance with an exemplary embodiment of the present invention;
FIG. **2B** is an isometric view of the oven cavity from Figure **2A** with multiple cooking chambers formed and defined by removable air plenums placed within the oven cavity;
FIG. **3A** is an isometric view of a removable air plenum from Figure **2B****;**
FIGS. **3B-3D** are cross-sectional side views of various alternative embodiments of a removable air plenum;
FIG. **4A** is an isometric view of a group of air blower systems for the convection oven from Figure **1** in accordance with an exemplary embodiment of the present invention;
FIG. **4B** is a cross-sectional side view of the convection oven from Figure **1** in accordance with an exemplary embodiment of the present invention;
FIGS. **5A-5C** are two cross-sectional side views and a cross-sectional top view, respectively, of the convection oven from Figure **1** in accordance with another exemplary embodiment of the present invention;
FIG. **6** depicts the air paths within the oven cavity when some of the removable air plenums are removed from the oven cavity of the convection oven from Figure **1****;** and
FIGS. **7A-7D** are cross-sectional side views of the convection oven from Figure **1** in accordance with yet another exemplary embodiment of the present invention.

### DETAILED DESCRIPTION OF THE EXEMPLARY EMBODIMENTS

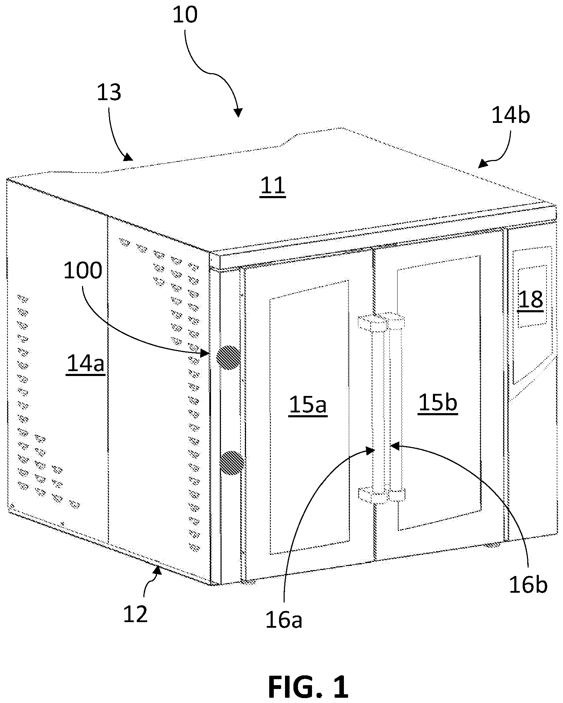

Referring now to the drawings and in particular to Figure 1, there is depicted an isometric view of a convection oven, in accordance with an exemplary embodiment of the present invention. As shown, a convection oven **10** includes a housing having a top panel **11,** a bottom panel **12,** a rear panel **13** and two side panels **14a, 14b.**

A pair of oven doors **15a, 15b** may form the front panel of the housing and are pivotally connected with side panels **14a, 14b,** respectively, via hinges. Oven doors **15a** and **15b** may include handles **16a** and **16b,** respectively, for opening and closing the same, and a latch may be provided to keep doors **15a, 15b** in a closed position. Door sensing switches (not shown) may be used to sense when oven doors **15a, 15b** are being opened or closed.

In alternative embodiments, instead of a pair of oven doors, the oven may include a single oven door (not shown) which is pivotally connected with one of side panels **14a, 14b,** top panel **11,** or bottom panel **12** via hinges, or one or more bottom hinged doors (also not shown).

Convection oven **10** also includes a control panel **18,** which may be implemented with touchscreen technology. An operator can enter commands or cooking parameters, such as cooking temperature, cooking time, fan speed, etc., via control panel **18** to effectuate cooking controls on any food items placed within convection oven **10.**

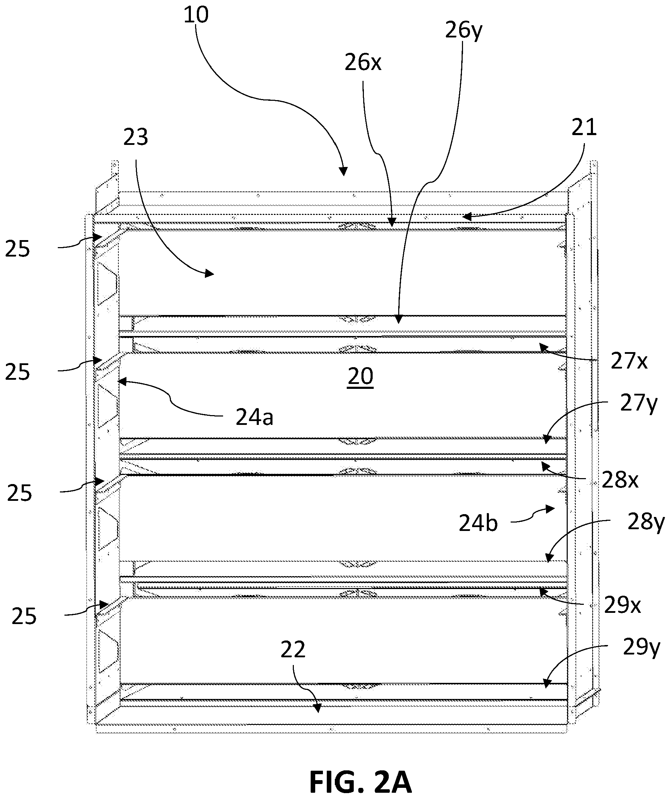

With reference now to Figures **2A-2B****,** there are depicted front and isometric views, respectively, of an oven cavity **20** within convection oven **10,** in accordance with an exemplary embodiment of the present invention. As shown, oven cavity **20** is defined by a top wall **21,** a bottom wall **22, a** back wall **23,** and side walls **24a, 24b** along with oven doors **15a, 15b.** The size of oven cavity **20** may be about 9.5 cubic feet in a full sized version in accordance with the exemplary embodiment. Located on side walls **24a, 24b** are multiple parallel rails **25** (e.g., four rails shown in Figure **2A**) configured to support one or more removable air plenums, which may also serve as food rack supports, to direct heated air flow.

Located on back wall **23** are multiple sets of air channel pairs (e.g., four sets shown in Figure **2A**) for bringing hot air into oven cavity **20.** In the exemplary embodiment shown in Figure **2A****,** a first set of air channel pairs includes a top air channel **26x** and a bottom air channel **26y,** a second set of air channel pairs includes a top air channel **27x** and a bottom air channel **27y,** a third set of air channel pairs includes a top air channel **28x** and a bottom air channel **28y,** and a fourth set of air channel pairs includes a top air channel **29x** and a bottom air channel **29y.** Each of the four air channel pairs can be configured to separately and independently send heated air into oven cavity **20.**

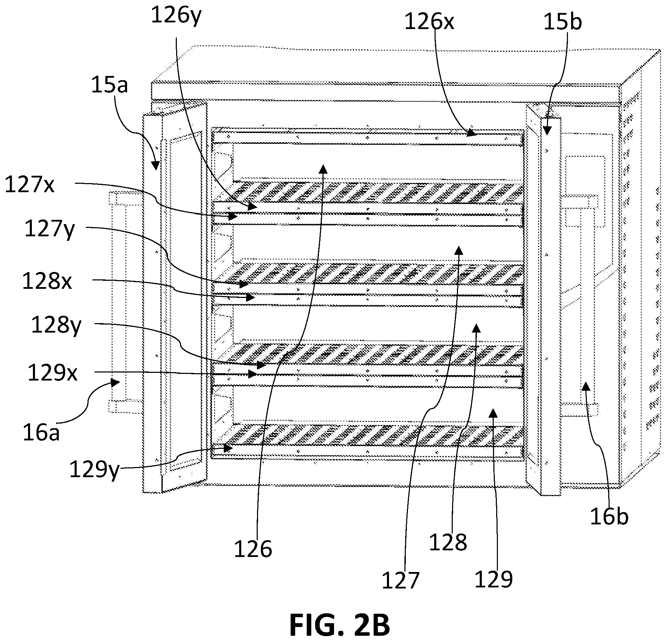

In Figure **2B****,** oven cavity **20** is shown to be populated with multiple removable air plenums **126x-129x** and **126y-129y.** These removable air plenums divide the oven cavity **20** into and define multiple (e.g., four in this case) cooking chambers **126,127,128,129.** As shown in Figure **2B****,** removable air plenum **126x** and removable air plenum 126y define a cooking chamber **126;** removable air plenum **127x** and removable air plenum **127y** define a cooking chamber **127;** removable air plenum **128x** and removable air plenum **128y** define a cooking chamber **128;** and removable air plenum **129x** and removable air plenum **129y** define a cooking chamber **129.** The size of at least one of these cooking chambers **126,127,128,129** may range between 1.4 and 1.9 cubic feet in accordance with the exemplary embodiment.

As also shown in Figure **2B****,** a pair of adjacent removable air plenums ("a removable plenum pair") may together define the bottom of an upper cooking chamber and the top of a lower cooking chamber: Air plenums **126y** and **127x** together define the bottom of cooking chamber **126** and the top of cooking chamber **127;** air plenums **127y** and **128x** together define the bottom of cooking chamber **127** and the top of cooking chamber **128;** and air plenums **128y** and **129x** together define the bottom of cooking chamber **128** and the top of cooking chamber **129.**

The number and the size of cooking chambers within oven cavity **20** may be changed or adjusted by removing one or more removable plenum pairs from oven cavity **20.** For example, by removing plenum pair **128y** and **129x** shown in Figure **2B****,** oven cavity **20** has a relatively large cooking chamber on the bottom (with the combined space for cooking chambers **128** and **129**) and two smaller cooking chambers **126, 127.**

In accordance with an exemplary embodiment of the present invention, the multiple removable air plenums **126x-129x** and **126y-129y** may be all substantially identical to each other in structure. In alternative embodiments, each or some of them may be configured differently.

In the exemplary embodiment shown in Figures **2A** and **2B****,** air plenum **126x** may be removably connected to or inserted into top air channel **26x;** air plenum **126y** may be removably connected to or inserted into bottom air channel **26y;** air plenum **127x** may be removably connected to or inserted into top air channel **27x;** air plenum **127y** may be removably connected to or inserted into bottom air channel **27y;** air plenum **128x** may be removably connected to or inserted into top air channel **28x;** air plenum **128y** may be removably connected to or inserted into bottom air channel **28y;** air plenum **129x** may be removably connected to or inserted into top air channel **29x;** and air plenum **129y** may be removably connected to or inserted into bottom air channel **29y.**

Together, removable air plenums defining a cooking chamber within oven cavity **20** (e.g., removable air plenums **127x** and **127y** for cooking chamber **127**) function to direct heated air from the corresponding air channels (e.g., top and bottom air channels **27x** and **27y**) into the cooking chamber (e.g., cooking chamber **127**), from the top and the bottom of the cooking chamber, for the purpose of heating any food items located within the cooking chamber.

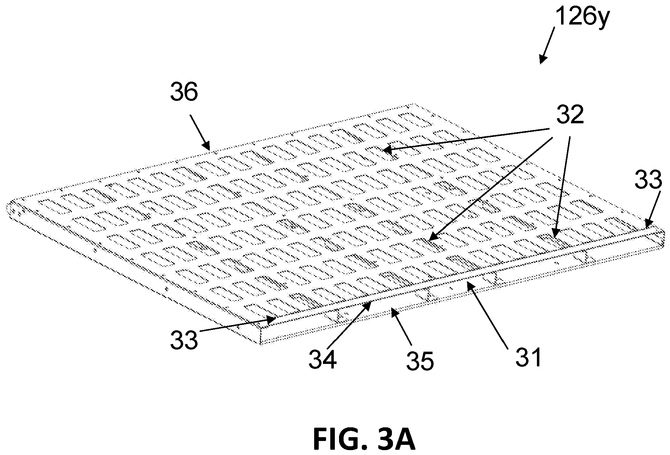

Referring now to Figure **3A****,** there is depicted an isometric view of an exemplary embodiment of a removable air plenum, such as removable air plenum **126y.** As shown, removable air plenum **126y** has an air intake edge **31** on one end and a distal end **36** at the opposite end. Air intake edge **31** is configured to be removably connected to an air channel, such as air channel **26y,** to receive heated air. Distal end **36** is closed off and covered to permit no air flow through the distal end.

The interior space of removable air plenum **126y** into which heated air is received from an air channel may be defined by a first surface **34** and a second surface **35** opposite to first surface **34.** First surface **34** comprises a flat planar surface having a plurality of air vents **32.** Air vents **32** are configured to direct the heated air received through air intake edge **31** into a cooking chamber in oven cavity **20,** such as cooking chamber **126.** As an example, the size of each air vent **32** may range between 1.25 and 2.5 square inches. While each of air vents **32** shown in Figure **3A** has the shape of a rectangle, it may have a different shape in alternative embodiments, such as square, circle, ellipse, rhombus, trapezoid, hexagon, or other type of regular or irregular geometric shape, Second surface **35** preferably permits no air flow through it.

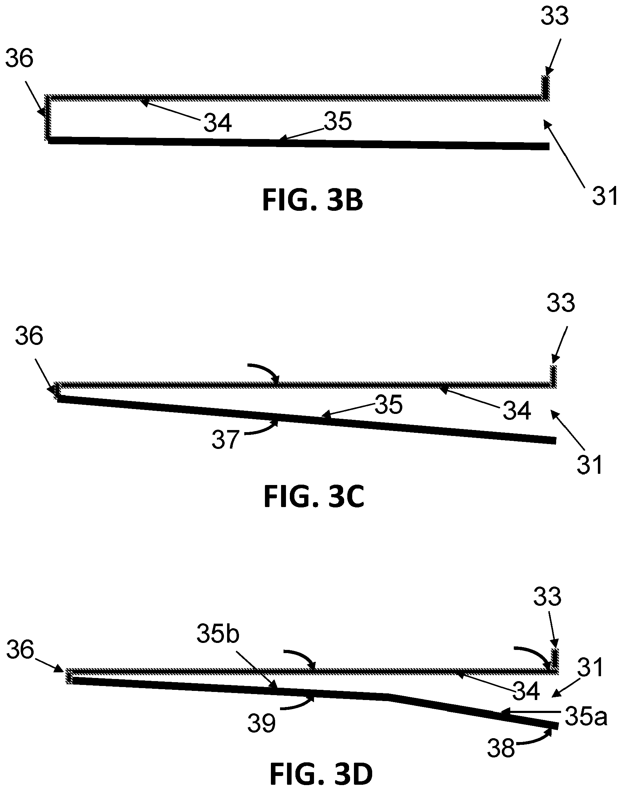

Referring now to Figures **3B** through **3D****,** there are depicted cross-sectional side views of various exemplary embodiments of a removable air plenum, such as removable air plenum **126y.** In these exemplary embodiments, the vertical spacing between first surface **34** and second surface **35** at air intake edge **31** is preferably substantially 1.0 inch. In alternative embodiments, the vertical spacing between first surface **34** and second surface **35** at air intake edge **31** and/or at any other portion of the removable air plenum may be adjustable depending on the dimension of an air channel, desired amount of heated air moving through the removable air plenum, etc.

In one exemplary embodiment shown in Figure **3B****,** first surface **34** and second surface **35** are both flat and parallel to each other. Thus, the vertical spacing between first surface **34** and second surface **35** are constant throughout the removable air plenum.

In an alternative embodiment shown in Figure **3C****,** second surface **35** comprises a planar surface which is slanted toward first surface **34** at a constant angle **37** as it approaches distal end **36.** In this configuration, the cross section of the interior space of the removable air plenum becomes smaller as the received heated air approaches distal end **36.** This configuration enables the heated air coming out through the air vents **32** that are located far from air intake edge **31** to be more focused, thereby facilitating substantially even distribution of heated air flow from the removable air plenum throughout the front and back portions of a cooking chamber in oven cavity **20.**

In another alternative embodiment shown in Figure **3D****,** second surface **35** may comprise two or more planar surface elements (two planar surface elements are shown in Figure **3D**) each of which is slanted toward first surface **34** at a different angle. Preferably, second surface **35** is slanted toward first surface **34** at a larger angle at air intake edge **31** than at near distal end **36.** For example, in Figure **3D****,** a first planar surface element **35a** of second surface **35** located between air intake edge **31** and an intermediate point of the air plenum (e.g., at about a third of the horizontal distance between air intake edge **31** and distal end **36** as shown Figure **3D**) may be slanted toward first surface **34** at an angle **38** of approximately 4.5 degrees. On the other hand, a second planar surface element **35b** located between the intermediate point and distal end **36** may be slanted toward first surface **34** at a smaller angle **39** of approximately 1.0 degree. The intermediate point where first planar surface element **35a** ends and second planar surface element **35b** begins may be selected at about a quarter, a third, or a half of the horizontal distance between air intake edge **31** and distal end **36.** Alternatively, the location of the intermediate point may be determined based on optimization of even distribution of heated air flow from the removable air plenum into both the front and back portions of a cooking chamber in oven cavity **20.**

In yet another alternative embodiment (not shown), second surface **35** may be curved toward first surface **34** at continuously decreasing angles (from the largest angle at air intake edge **31** to the smallest angle at distal end **36**) as it approaches distal end **36.**

Referring back to Figure **3A****,** removable air plenum **126y** may also include a tab **33** (or a set of tabs). A tab **33** functions to open a flap (not shown) that covers air channel **26y** when removable air plenum **126y** is not connected to or inserted into air channel **26y.**

In alternative embodiments, removable air plenum **126y** may also include a different kind of tab(s) (not shown) to ensure that air plenum **126y** is sealed to the corresponding air channel 26y. The tab may be configured and positioned in air plenum **126y** in such a way that when the oven doors (e.g., oven doors **15a, 15b** shown in Figures **1** and **2B**) close, the metal edge of the door frame strikes the tab if air plenum **126y** is not pushed all the way against the corresponding air channel **26y** on back wall **23.** In this way, as the oven doors close, a tab can be used to push air plenum **126y** all the way against back wall **23** and perfect the seal between air plenum **126y** and air channel **26y.**

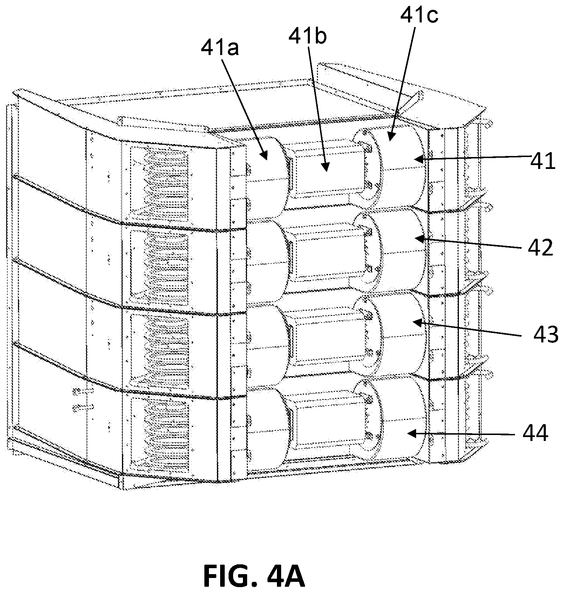

With reference now to Figures **4A-4B****,** there are depicted isometric and cross-sectional side views, respectively, of a group of air blower systems and the associated airflow path within convection oven **10** in accordance with an exemplary embodiment of the present invention. As shown, four air blower systems **41-44** may be located at the rear of convection oven **10.** Each of air blower systems **41-44** may be equipped with its own heater and may further be controlled independently of the other blower systems with respect to both temperature and/or blower speed. In this exemplary embodiment, air blower systems **41-44** all have substantially identical structure and similar airflow path. Hence, only blower system **41** will be further described below in details. In alternative embodiments, each or some of the blower systems may be differently configured.

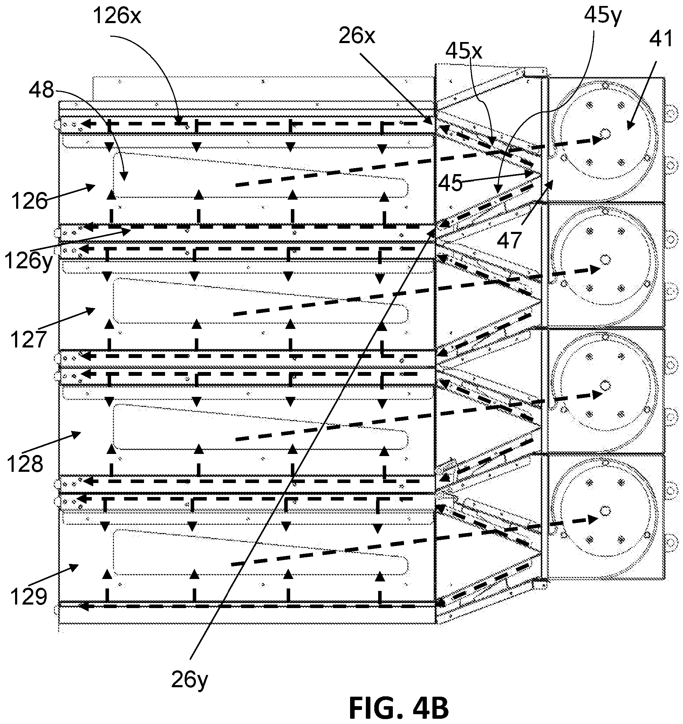

As shown in Figure **4A****,** air blower system **41** is equipped with two separate but identical air blowers **41a** and **41c,** which are driven by a single motor **41b** placed between the two blowers. As shown in Figure **4B****,** blower system **41** sends heated air through an air diverter **45** positioned in front of outlet **47** of air blower system **41.**

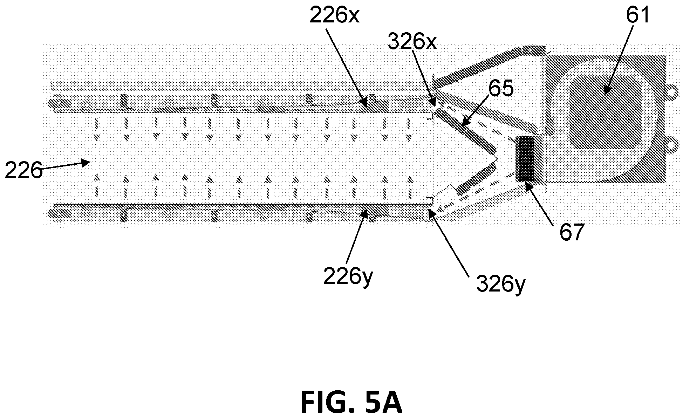

Figure **4B** shows air diverter **45** positioned right next to the outlet **47** of blower system **41.** In alternative embodiments, an air diverter may be positioned at a certain distance from the outlet of blower system, as shown in Figures **5A-5C** and discussed below.

As shown in Figure **4B****,** air diverter **45** may comprise two substantially identical planar elements **45x** and **45y** joined along the side that is nearest to the outlet of air blowers **41a, 41c** at a fixed angle to form a substantially symmetrical ">" shape when viewed from the side. In accordance with the exemplary embodiment, the angle between the planar elements of the air diverter **65, 66** may be set between 45 degrees and 90 degrees, or between 55 degrees and 80 degrees, or between 65 degrees and 70 degrees. For example, the angle between the planar elements of the air diverter **65, 66** may be about 68 degrees. In alternative embodiments, the angle between the two planar elements forming air diverter **65, 66** may be adjustable.

In Figure **4B****,** the tip of the ">" shaped air diverter **45** points toward the vertical center of the outlet **47** of air blower system **41.** Air diverter **45** is configured to separate the heated air exiting blower system **41** into a top airstream and a bottom airstream. The ">" shaped diverter is symmetrical to facilitate substantially even allocation of heated air to top and bottom airstreams. Depending on the bias of air blower system **41,** slightly more heated air may be allocated to a bottom airstream than to a top airstream. Typically, 53% - 60% of heated air from air blower system **41** is allocated to a bottom airstream through air diverter **45,** while 40% - 47% of heated air is allocated to a top airstream.

The top airstream from air diverter **45** then travels through top air channel 26x and enters removable air plenum **126x** where the heated air is channeled and directed to be substantially evenly disbursed in a downward direction into a cooking chamber in oven cavity **20,** such as cooking chamber **126.** Similarly, the bottom airstream from air diverter **45** travels through bottom air channel **26y** and enters removable air plenum **126y** where the heated air is channeled and directed to be substantially evenly disbursed in an upward direction into cooking chamber **126.** Once entering cooking chamber **126,** the heated air comes into contact with any food item that is placed on one or more food racks (not shown) within cooking chamber **126.** Afterwards, the air within the cooking chamber **126** may be drawn towards return air opening(s) **48** on one or both side walls of oven cavity **20** and travels back to blower system **41.**

Referring now to Figures **5A-5C****,** there are depicted two cross-sectional side views and one cross-sectional top view, respectively, of air blower systems **61, 62,** air diverters **65, 66,** and the associated airflow path within convection oven **10** in accordance with another exemplary embodiment of the present invention.

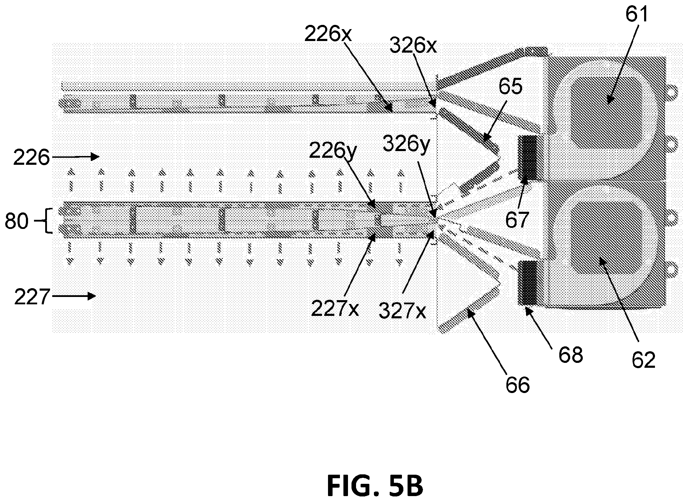

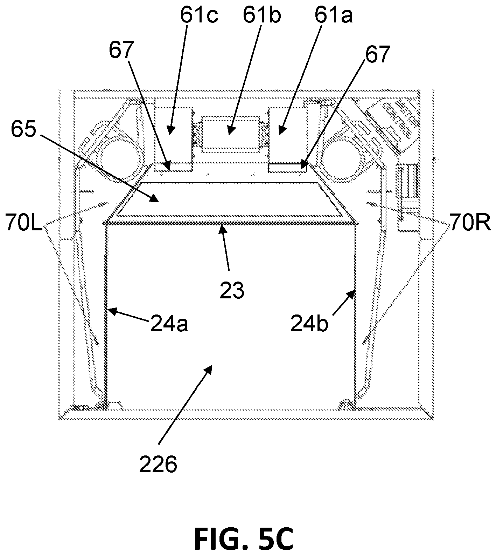

Figure **5C** is a cross-sectional top view of convection oven **10.** As shown in Figure **5C****,** air blower system **61** may be equipped with two separate but identical air blowers **61a** and **61c,** which are driven by a single motor **61b** placed between the two blowers. Air blower system **62** shown in Figure **5B** may also have substantially the same structure as air blower system **61.**

Figures **5A-5B** provide cross-sectional side views of two adjacent cooking chamber **226** and cooking chamber **227** within oven cavity **20** which receive heated air from air blower system **61** and air blower system **62,** respectively, as indicated by the airflow paths schematically illustrated in the figures. Air blower system **61** sends heated air toward an air diverter **65** positioned in front of the outlet **67** of air blower system **61,** and air blower system **62** sends heated air toward an air diverter **66** positioned in front of the outlet **68** of air blower system **62.**

Unlike the configuration shown in Figure **4B****,** each of air diverters **65, 66** in Figures **5A-5C** is positioned at a certain distance away from outlet **67, 68** of the corresponding air blower system **61, 62.** As an example, the nearest end of air diverter **65, 66** (i.e., the pointed tip of the ">" shaped air diverter) is spaced apart from outlet **67, 68** of air blower system **61, 62** by approximately 2.4 inches. In this example, the distance between outlet **67, 68** of air blower system **61, 62** and cooking chamber **226, 227** in oven cavity **20** is fixed at approximately 6.1 inches. In alternative embodiments, the distance between air diverter **65, 66** and outlet **67, 68** of air blower system **61, 62** may be adjustable.

Air diverters **65** and **66** may be identical in structure. Each of air diverters **65** and **66** may comprise two substantially identical planar elements that are joined along the side nearest to outlet **67, 68** of air blower system **61, 62** at a fixed angle to form a substantially symmetrical ">" shape when viewed from the side. In accordance with the exemplary embodiment, the angle between the planar elements of the air diverter **65, 66** may be set between 45 degrees and 90 degrees, or between 55 degrees and 80 degrees, or between 65 degrees and 70 degrees. For example, the angle between the planar elements of the air diverter **65, 66** may be about 68 degrees. In alternative embodiments, the angle between the two planar elements forming air diverter **65, 66** may be adjustable.

As shown in the top view of Figure **5C****,** each of the planar elements forming air diverter **65** may be in the shape of a symmetric isosceles trapezoid, with the narrower side being the nearest to outlet **67** of air blower system **61** and the wider side being the nearest to cooking chamber **226** in oven cavity **20.**

Each of air diverters **65, 66** is configured to separate the heated air exiting blower system **61, 62** into a top airstream and a bottom airstream. For example, as shown in Figures **5A-5B****,** the tip of the ">" shaped air diverter **65, 66** points toward the vertical center of the outlet **67, 68** of air blower system **61, 62** to optimize substantially even allocation of heated air exiting outlet **67, 68** to top and bottom airstreams.

As shown in Figure **5A****,** the top airstream from air diverter **65** travels through top air channel **326x** and enters removable air plenum **226x** where the heated air is channeled and directed to be substantially evenly disbursed in a downward direction into a cooking chamber in oven cavity **20,** such as cooking chamber **226.** Similarly, the bottom airstream from air diverter **65** travels through bottom air channel **326y** and enters removable air plenum **226y** where the heated air is channeled and directed to be substantially evenly disbursed in an upward direction into cooking chamber **226.** Once entering cooking chamber **226,** the heated air comes into contact with any food item that is placed on one or more food racks (not shown) within cooking chamber **226.**

Afterwards, the air within cooking chamber **226** may be drawn towards return air openings **70L** and **70R** (shown in Figure **5C**), which are respectively located on left and right side walls **24a, 24b** of oven cavity **20** within cooking chamber **226** and travels back to air blower system **61.** In at least one embodiment, each of return air openings **70L, 70R** is rectangular in shape, approximately 16.5 inches horizontally and approximately 2.5 inches vertically. In at least one embodiment, the front end of each of return air openings **70L, 70R** is positioned at approximately 3.1 inches back from the front of oven cavity **20.** In at least one embodiment, the bottom end of each of return air openings **70L, 70R** is approximately 0.75 inches above a food rack of the corresponding cooking chamber within oven cavity **20.**

Referring now to Figure **5B****,** there is depicted a cross-sectional side view of a pair of adjacent removable air plenums **226y** and **227x,** which form a removable plenum pair **80.** Removable plenum pair **80** defines the bottom of an upper cooking chamber in oven cavity **20,** such as cooking chamber **226,** and the top of a lower cooking chamber in oven cavity **20,** such as cooking chamber **227.** As shown in Figure **5B****,** a portion of heated air exiting from outlet **67** of air blower system **61** travels via air diverter **65** and through bottom air channel **326y** and enters removable air plenum **226y** where the heated air is channeled and directed to be substantially evenly disbursed in an upward direction into the upper cooking chamber in oven cavity **20,** such as cooking chamber **226.** In addition, a portion of heated air exiting from outlet **68** of air blower system **62** travels via air diverter **66** and through top air channel **327x** and enters removable air plenum **227x** where the heated air is channeled and directed to be substantially evenly disbursed in a downward direction into the lower cooking chamber in oven cavity **20,** such as cooking chamber **227.**

In alternative embodiments, removable plenum pair **80** may include one or more tabs (not shown) to ensure that each of removable air plenums **226y** and **227x** is sealed to the corresponding air channel **326y, 327x.** The tab may be configured and positioned in removable plenum pair **80** in such a way that when the oven doors (e.g., oven doors **15a, 15b** shown in Figures **1** and **2B**) close, the metal edge of the door frame strikes the tab if removable plenum pair **80** is not pushed all the way against the corresponding air channels **326y, 327x** on back wall **23.** In this way, as the oven doors close, a tab can be used to push removable plenum pair **80** all the way against back wall **23** and perfect the seal between each of air plenums **226y** and **227x** and their respective corresponding air channels **326y, 327x.**

Convection oven **10** having a four-cooking chamber configuration (e.g., having four cooking chambers **126, 127, 128, 129**), as shown in Figures **2B** and **4B****,** can be easily transformed into, for example, a three-cooking chamber configuration, a two-cooking chamber configuration, or a one-cooking chamber configuration by removing one or more removable air plenums (or removable plenum pairs) from oven cavity **20.**

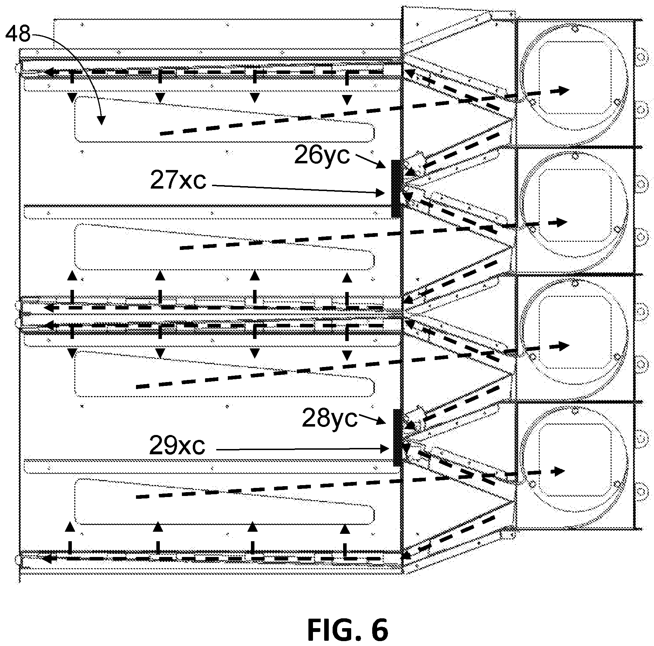

Referring now to Figure **6****,** there is illustrated the airflow of convection oven **10** in a two-cooking chamber configuration after a plenum pair comprising air plenum **126y** and air plenum **127x,** and another plenum pair comprising air plenum **128y** and air plenum **129x** have been removed from oven cavity **20.** After the removal of air plenums **126y** and **127x,** movable flaps **26yc** and **27xc** are activated (e.g., drop down) to cover air channels **26y** and **27x,** respectively. Similarly, after the removal of air plenums **128y** and **129x,** movable flaps **28yc** and **29xc** are activated (e.g., drop down) to cover air channels **28y** and **29x,** respectively. Flaps **26yc, 27xc, 28yc** and **29xc** enable more heated air to be delivered through the remaining open air channels while also eliminating air entry from the back of oven cavity **20,** which would introduce cooking unevenness between food located in the back and food located in the front of oven cavity **20.**

In accordance with an exemplary embodiment of the present invention, each of flaps **26yc, 27xc, 28yc** and **29xc** may be automatically engaged and covers the corresponding air channel when a tab **33** of the corresponding removable air plenum (e.g., **126y** in Figure **3A**) is not in contact or engaged with the corresponding air channel. In other words, when no removable air plenum is connected to and engaged with an air channel (e.g., via tab **33**), a flap automatically covers the corresponding air channel. In alternative embodiments, each of flaps **26yc, 27xc, 28yc** and **29xc** may be manually or automatically engaged through any number of methods of covering openings that are well known in the art.

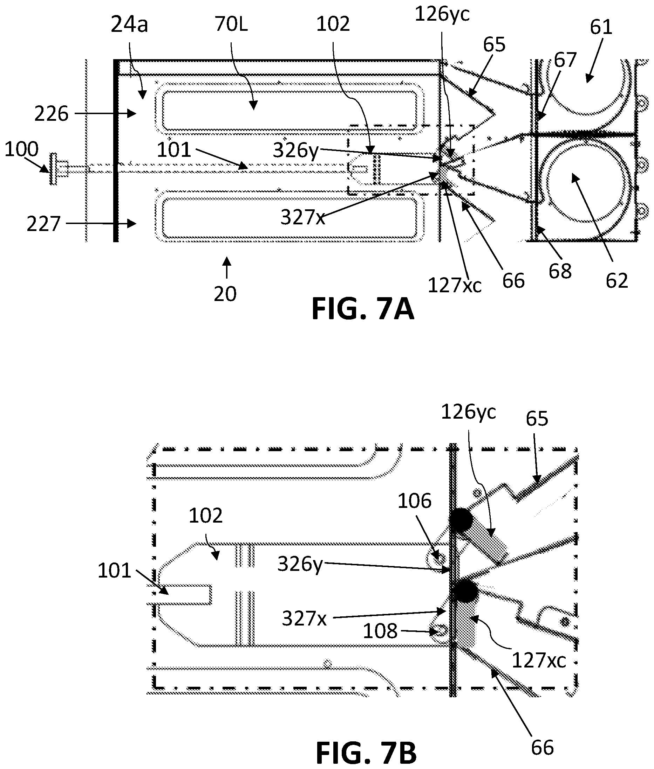

Referring now to Figures **7A-7D**, there are depicted cross-sectional side views of movable flaps **126yc** and **127xc** for covering air channels **326y** and **327x,** respectively, in accordance with yet another exemplary embodiment of the present invention. While Figures **7A-7D** do not show removable air plenums, a removable plenum pair **80** comprising upper air plenum **226y** and lower air plenum **227x** can be connected to air channels **326y** and **327x** and define upper and lower cooking chambers **226** and **227** within oven cavity **20,** as illustrated in Figure **5B****.**

In this exemplary embodiment, flap opening/closing mechanism may include an exterior knob **100** positioned to the left of oven door **15a** (as shown in Figure **1**). Knob **100** is connected to a rod **101** that runs between left side wall **24a** of oven cavity **20** and left exterior side panel **14a** of oven **10** (see Figure **1**). The distal end of rod **101** is attached to the front portion of a flange **102,** which is connected to moveable flaps **126yc** and **127xc** via corresponding pivots **106, 108.** In at least one embodiment, the linked assembly of knob **100,** rod **101,** and flange **102** can be moved back and forth manually to move flaps **126yc** and **127xc** into open and close positions.

As shown in Figure **7A****,** when knob **100** is in the "out" position (e.g., pulled forward in direction away from oven cavity **20**), flange **102** pulls flaps **126yc** and **127xc** over air channels **326y** and **327x** via corresponding pivots **106** and **108,** respectively, thereby keeping heated air exiting from outlets **67, 68** of air blower systems **61, 62** from entering removable plenum pair **80** (not shown; see Figure **5B**) through air channels **326y** and **327x.** Figure **7B** depicts an enlarged cross-sectional side view of flaps **126yc** and **127xc** being pulled over and blocking air channels **326y** and **327x.**

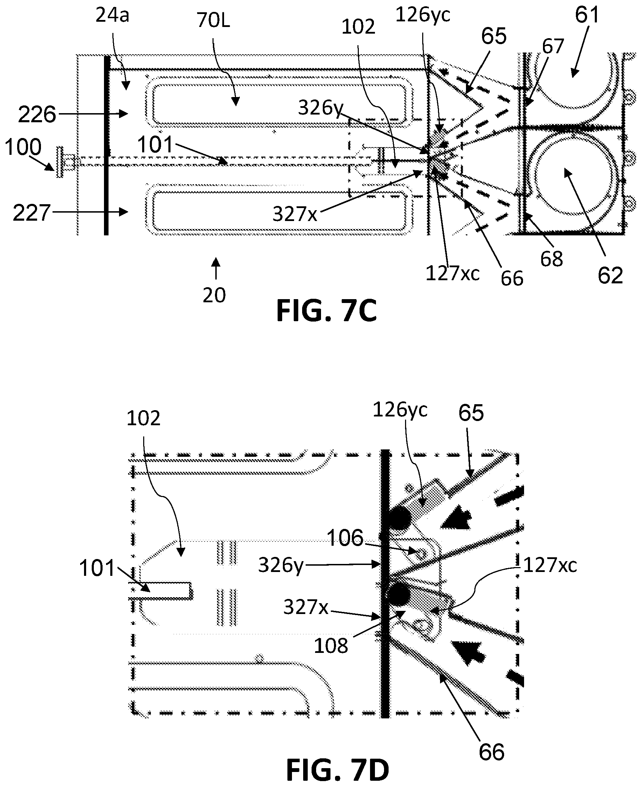

On the other hand, as shown in Figure **7C****,** when knob **100** is in the "in" position (e.g., pushed backward in direction toward oven cavity **20**), flange **102** slides further inward, pushing flaps **126yc** and **127xc** away from air channels **326y** and **327x** via corresponding pivots **106** and **108,** thereby allowing heated air exiting from outlets **67, 68** of air blower systems **61, 62** and moving past air diverters **65, 66** to enter removable plenum pair **80** (not shown; see Figure **5B**) through air channels **326y** and **327x.** Figure **7D** is an enlarged cross-sectional side view of flaps **126yc** and **127xc** in the open position, allowing air passage through air channels **326y** and **327x.**

In alternative embodiments, electric switches, touchscreen, etc. can be used to trigger opening and closing of flaps through electro-mechanical means.

As described above, oven cavity **20** can be re-configured to have different numbers of cooking chambers with variable heights simply by re-arranging the location and the number of removable air plenums (such as a four-cooking chamber configuration shown in Figures **2B** and **4B** and a two-cooking chamber configuration shown in Figure **6**).

Whether in a two-cooking chamber configuration or a four-cooking chamber configuration, each of the cooking chambers within oven cavity **20** may be utilized to cook different food items (*e.g.*, food items that require different cook times and/or different cooking temperature). Using a four-cooking chamber configuration as an example, each of the four cooking chambers can be independently managed by a corresponding one of blower systems **41-44.** Specifically, cook times, temperatures, and blower speeds tailored for food items located in each of the four cooking chambers can be separately entered via a control panel, such as control panel **18** in Figure **1****,** such that heated air directed to each of the four cooking chambers will be independently supplied from one of blower systems **41-44.**

For example, biscuits may be placed in a first cooking chamber (e.g., cooking chamber **126**) at 7:30 a.m. to cook for 15 minutes at 350 °F at a medium blower speed. Bacon strips may be placed in a second cooking chamber (e.g., cooking chamber **127**) at 7:35 a.m. to cook for 5 minutes at 425 °F at a high blower speed. Pies may be placed in a third cooking chamber (e.g., cooking chamber **128**) at about the same time as the bacon strips, but will be cooked for a longer time (e.g., 45 minutes) at a lower temperature (e.g., 325 °F) at a low blower speed. And cookies may be placed in a fourth cooking chamber (e.g., cooking chamber **129**) at 7:40 a.m. to cook for 10 minutes at 400 °F at a medium blower speed. In this example, the bacon strips will be done at 7:40 a.m., the biscuits will be done at 7:45 a.m., cookies will be done at 7:50 a.m., and the pies will be done at 8:20 a.m., all using the same convection oven **10.**

In the above example, oven doors (such as oven doors **15a** and **15b** from Figure **1**) are likely to be opened and closed multiple times while the various food items are in the process of being cooked for a predetermined time. Each time the oven doors are opened, the cooking process already in progress for the various cooking chambers will likely be disrupted. In order to compensate for this disruption, convection oven **10** may include a sensor for detecting opening of oven doors **15a** and **15b** during a cook cycle. The length of time that doors **15a** and **15b** are kept open may then be recorded and the cooking parameters for the various food items placed within different cooking chambers (e.g., cooking chambers **126, 127, 128, 129**) may be re-adjusted based on the amount of time the oven doors are kept open during their respective cook cycles. For example, the cook times for the various food items placed in the various cooking chambers may be extended for an amount of time that is substantially identical or proportional to the amount of time the oven doors are kept open during their respective cook cycles.

As has been described, the present invention provides an improved convection oven providing a more uniform flow of heated air within the cooking chamber and also providing more flexibility for oven configurability.

## Claims

1. A cooking oven (10) comprising:
a housing having an oven cavity (20) and an oven door (15a, 15b) for access to the oven cavity;
an upper air channel (45x);
a lower air channel (45y);
a removable plenum pair (80) defining the bottom of an upper cooking chamber (126) and the top of a lower cooking chamber (127) in the oven cavity, the plenum pair comprising:
an upper air plenum (126y) removably connected to the upper air channel, the upper air plenum comprising an air intake edge (31) configured to receive air flow from the upper air channel and a plurality of air vents (32) configured to direct the air flow upwards into the upper cooking chamber; and
a lower air plenum (127x) removably connected to the lower air channel, the lower air plenum comprising an air intake edge (31) configured to receive air flow from the lower air channel and a plurality of air vents (32) configured to direct the air flow downwards into the lower cooking chamber; and
an air blower (41-44) configured to send heated air to the upper air channel and the lower air channel
**characterised in that** the air blower comprises:
an upper air blower (410) configured to send heated air toward the upper cooking chamber; and
a lower air blower (44) configured to send heated air toward the lower cooking chamber.

2. The cooking oven of claim 1, further comprising:
an upper air diverter (45) positioned in front of an outlet of the upper air blower and configured to direct a portion of the heated air from the upper air blower into the upper air plenum through the upper air channel; and
a lower air diverter (45) positioned in front of an outlet of the lower air blower and configured to direct a portion of the heated air from the lower air blower into the lower air plenum through the lower air channel;
optionally wherein the distance between the upper air diverter and the outlet of the upper air blower is adjustable;
optionally wherein the distance between the lower air diverter and the outlet of the lower air blower is adjustable.

3. The cooking oven of claim 2, wherein at least one of the upper air diverter and the lower air diverter comprises two substantially identical planar elements (45x, 45y) joined along a side nearest to the outlet of the corresponding one of the upper air blower and the lower air blower at an angle to form a substantially symmetrical ">" shape when viewed from the side.

4. The cooking oven of claim 3, wherein a tip of the ">" shaped air diverter points to the vertical center of the outlet of the corresponding one of the upper air blower and the lower air blower.

5. The cooking oven of claim 3, wherein the distance between the nearest side of the ">" shaped air diverter and the outlet of the corresponding one of the upper air blower and the lower air blower is substantially 2.4 inches.

6. The cooking oven of claim 3, wherein the angle between the two planar elements (45x,45y) is fixed or adjustable; and/or
wherein the angle between the two planar elements is between 65 degrees and 70 degrees; and/or
wherein each of the two planar elements is substantially in the shape of an isosceles trapezoid.

7. The cooking oven of claim 1, wherein at least one of the upper air plenum and the lower air plenum comprises a first surface (34) and a second surface (35) opposite to the first surface, the first surface comprising a flat planar surface having the plurality of air vents (32) and the second surface being slanted toward the first surface so that the vertical spacing between the first surface and the second surface at the air intake edge (31) of the air plenum is greater than the vertical spacing between the first surface and the second surface at a distal end of the air plenum;
optionally wherein the vertical spacing between the first surface and the second surface at the air intake edge of the air plenum is substantially one inch;
optionally wherein the second surface is slanted at a greater angle at the air intake edge than at near the distal end;
optionally wherein the second surface comprises at least two planar elements which are slanted toward the first surface at different angles;
optionally wherein the second surface is slanted at 4.5 degrees at the air intake edge and at 1.0 degree at near the distal end.

8. The cooking oven of claim 1, wherein the upper air channel and the lower air channel are located on a back wall (23) of the oven cavity.

9. The cooking oven of claim 1, wherein each of the upper air channel and the lower air channel is coverable by a flap (26yc, 27xc, 28yc, 29xc) if not connected to the corresponding one of the upper air plenum and the lower air plenum.

10. The cooking oven of claim 9, wherein each of the upper air plenum and the lower air plenum comprises a tab (33) configured to open the flap when connected to the corresponding one of the upper air channel and the lower air channel.

11. The cooking oven of claim 1, further comprising a control panel (18) for separately and independently controlling the upper cooking chamber and the lower cooking chamber.

12. The cooking oven of claim 1, further comprising a sensor for detecting the oven door being kept open during a cook cycle;
the cooking oven optionally further comprising a controller for re-adjusting a cooking parameter for at least one of the upper cooking chamber and the lower cooking chamber based on the amount of time the oven door is kept open during the cook cycle.

13. The cooking oven of claim 1, wherein the upper air plenum is configured to support a food rack for the upper cooking chamber.

14. The cooking oven of claim 1, further comprising return air openings (48) on left and right side walls of the oven cavity.

15. The cooking oven of claim 1, further comprising:
an upper moveable flap (126yc) for covering the upper air channel;
a lower moveable flap (127xc) for covering the lower air channel;
a rod (101); and
a flange (102) attached to the rod at a front end and coupled to the upper moveable flap and the lower moveable flap at a back end via one or more pivots (106, 108),
wherein the rod and the flange form a moveable assembly which is capable of pulling the upper moveable flap and the lower moveable flap over the upper air channel and the lower air channel and pushing the upper moveable flap and the lower moveable flap away from the upper air channel and the lower air channel by moving back and forth, respectively.

## Patentansprüche

1. Garofen (10) umfassend:
ein Gehäuse mit einem Ofenraum (20) und einer Ofentür (15a, 15b) für Zugang zum Ofenraum;
einen oberen Luftkanal (45x);
einen unteren Luftkanal (45y);
ein entfernbares Kammerpaar (80), das den Boden einer oberen Garkammer (126) definiert und
die Oberseite einer unteren Garkammer (127) im Ofenraum, das Kammerpaar umfassend:
eine obere Luftkammer (126y), die abnehmbar mit dem oberen Luftkanal verbunden ist, die obere Luftkammer umfassend eine Lufteinlasskante (31), die konfiguriert ist, um Luftstrom von dem oberen Luftkanal aufzunehmen, und eine Vielzahl von Entlüftungsöffnungen (32), die konfiguriert sind, um den Luftstrom nach oben in die obere Garkammer zu leiten; und
eine untere Luftkammer (127x), die abnehmbar mit dem unteren Luftkanal verbunden ist, die obere Luftkammer umfassend eine Lufteinlasskante (31), die konfiguriert ist, um Luftstrom von dem unteren Luftkanal aufzunehmen, und eine Vielzahl von Entlüftungsöffnungen (32), die konfiguriert sind, um den Luftstrom nach unten in die untere Garkammer zu leiten; und
ein Luftgebläse (41-44), das konfiguriert ist, um erwärmte Luft zum oberen Luftkanal und zum unteren Luftkanal zu schicken
**dadurch gekennzeichnet, dass** das Luftgebläse umfasst:
ein oberes Luftgebläse (410), das konfiguriert ist, um erwärmte Luft zur oberen Garkammer zu schicken; und
ein unteres Luftgebläse (44), das konfiguriert ist, um erwärmte Luft zur unteren Garkammer zu schicken.

2. Garofen nach Anspruch 1, ferner umfassend:
eine obere Luftumlenkung (45), die vor einem Auslass des oberen Luftgebläses positioniert und konfiguriert ist, um einen Teil der erwärmten Luft vom oberen Luftgebläse durch den oberen Luftkanal in die obere Luftkammer zu leiten; und
eine untere Luftumlenkung (45), die vor einem Auslass des unteren Luftgebläses positioniert und konfiguriert ist, um einen Teil der erwärmten Luft vom unteren Luftgebläse durch den unteren Luftkanal in die untere Luftkammer zu leiten;
optional wobei der Abstand zwischen der oberen Luftumlenkung und dem Auslass des oberen Luftgebläses einstellbar ist;
optional wobei der Abstand zwischen der unteren Luftumlenkung und dem Auslass des unteren Luftgebläses einstellbar ist.

3. Garofen nach Anspruch 2, wobei mindestens eine der oberen Luftumlenkung und der unteren Luftumlenkung zwei im Wesentlichen identische ebene Elemente (45x, 45y) umfassen, die entlang einer Seite, die dem Auslass des entsprechenden einem des oberen Luftgebläses und des unteren Luftgebläses in einem Winkel nächstgelegen sind, um von der Seite gesehen eine im Wesentlichen symmetrische ">" Form zu bilden.

4. Garofen nach Anspruch 3, wobei eine Spitze der ">" -förmigen Luftumlenkung zur vertikalen Mitte des Auslasses des oberen Luftgebläses oder des unteren Luftgebläses zeigt.

5. Garofen nach Anspruch 3, wobei der Abstand zwischen der nächstgelegen Seite der ">" -förmigen Luftumlenkung und dem Auslass des oberen Luftgebläses und des unteren Luftgebläses im Wesentlichen 2,4 Zoll ist.

6. Garofen nach Anspruch 3, wobei der Winkel zwischen den beiden ebenen Elementen (45x, 45y) fest oder einstellbar ist; und/oder
wobei der Winkel zwischen den zwei ebenen Elementen zwischen 65 Grad und 70 Grad ist; und/oder
wobei jedes der beiden ebenen Elemente im Wesentlichen die Form eines gleichschenkligen Trapezes hat.

7. Garofen nach Anspruch 1, wobei mindestens eine der oberen Luftkammer und der unteren Luftkammer eine erste Oberfläche (34) und eine der ersten Oberfläche gegenüberliegende zweite Oberfläche (35) aufweist, die erste Oberfläche umfassend eine flache ebene Oberfläche mit der Vielzahl von Entlüftungsöffnungen (32) und die zweite Oberfläche in Richtung der ersten Oberfläche geneigt ist, so dass der vertikale Abstand zwischen der ersten Oberfläche und der zweiten Oberfläche an der Lufteinlasskante (31) der Luftkammer größer ist als der vertikale Abstand zwischen der ersten Oberfläche und der zweiten Oberfläche an einem distalen Ende der Luftkammer;
optional wobei der vertikale Abstand zwischen der ersten Oberfläche und der zweiten Oberfläche an der Lufteinlasskante der Luftkammer im Wesentlichen 1 Zoll ist;
optional wobei die zweite Oberfläche an der Lufteinlasskante mit einem größeren Winkel geneigt ist als nahe dem distalen Ende;
optional wobei die zweite Oberfläche mindestens zwei ebene Elemente umfasst, die in unterschiedlichen Winkeln zur ersten Oberfläche geneigt sind;
optional wobei die zweite Oberfläche an der Lufteinlasskante um 4,5 Grad und nahe dem distalen Ende um 1,0 Grad geneigt ist.

8. Garofen nach Anspruch 1, wobei der obere Luftkanal und der untere Luftkanal an einer Rückwand (23) der Garkammer angeordnet sind.

9. Garofen nach Anspruch 1, wobei sowohl der obere Luftkanal als auch der untere Luftkanal durch eine Klappe (26yc, 27xc, 28yc, 29xc) abgedeckt werden können, wenn sie nicht mit der entsprechenden der oberen Luftkammer und der unteren Luftkammer verbunden sind.

10. Garofen nach Anspruch 9, wobei jede der oberen Luftkammer und der unteren Luftkammer eine Lasche (33) aufweist, die konfiguriert ist, um die Klappe zu öffnen, wenn sie mit dem entsprechenden des oberen Luftkanals oder des unteren Luftkanals verbunden ist.

11. Garofen nach Anspruch 1, ferner umfassend eine Steuertafel (18) zum getrennten und unabhängigen Steuern der oberen Garkammer und der unteren Garkammer.

12. Garofen nach Anspruch 1, ferner umfassend einem Sensor zum Erfassen, dass die Ofentür während eines Garzyklus offengehalten wird;
wobei der Garofen optional ferner umfassend eine Steuerung zum erneuten Einstellen eines Garparameters für mindestens eine der oberen Garkammer und der unteren Garkammer basierend auf der Zeitdauer, in der die Backofentür während des Garzyklus offengehalten wird.

13. Garofen nach Anspruch 1, wobei die obere Luftkammer konfiguriert, um ein Lebensmittelregal für die obere Garkammer zu tragen.

14. Garofen nach Anspruch 1, ferner umfassend Rückluftöffnungen (48) an linken und rechten Seitenwänden der Garkammer.

15. Garofen nach Anspruch 1, ferner umfassend:
eine obere bewegliche Klappe (126yc) zum Abdecken des oberen Luftkanals;
eine untere bewegliche Klappe (127xc) zum Abdecken des unteren Luftkanals;
eine Stange (101); und
einen Flansch (102), der an einem vorderen Ende an der Stange angebracht und an einem hinteren Ende über einen oder mehrere Zapfen (106, 108) mit der oberen beweglichen Klappe und der unteren beweglichen Klappe gekoppelt ist,
wobei die Stange und der Flansch eine bewegliche Anordnung bilden, die in der Lage ist, die obere bewegliche Klappe und die untere bewegliche Klappe über den oberen Luftkanal und den unteren Luftkanal zu ziehen und die obere bewegliche Klappe und die untere bewegliche Klappe von dem oberen Luftkanal und dem unteren Luftkanal durch jeweiliges Hin- und Herbewegen wegzudrücken.

## Revendications

1. Four de cuisson (10) comprenant :
un boîtier ayant une cavité de four (20) et une porte de four (15a, 15b) pour un accès à la cavité de four ;
un canal d'air supérieur (45x) ;
un canal d'air inférieur (45y) ;
une paire de plénums amovible (80) définissant le fond d'une chambre de cuisson supérieure (126) et
le sommet d'une chambre de cuisson inférieure (127) dans la cavité de four, la paire de plénums comprenant :
un plénum d'air supérieur (126y) raccordé de manière amovible au canal d'air supérieur, le plénum d'air supérieur comprenant un bord d'admission d'air (31) conçu pour recevoir un flux d'air depuis le canal d'air supérieur et une pluralité d'évents d'air (32) conçus pour diriger le flux d'air vers le haut dans la chambre de cuisson supérieure ; et
un plénum d'air inférieur (127x) raccordé de manière amovible au canal d'air inférieur, le plénum d'air inférieur comprenant un bord d'admission d'air (31) conçu pour recevoir un flux d'air depuis le canal d'air inférieur et une pluralité d'évents d'air (32) conçus pour diriger le flux d'air vers le bas dans la chambre de cuisson inférieure ; et
une soufflante d'air (41 à 44) conçue pour envoyer de l'air chauffé au canal d'air supérieur et au canal d'air inférieur
**caractérisé en ce que** la soufflante d'air comprend :
une soufflante d'air supérieure (410) configurée pour envoyer de l'air chauffé vers la chambre de cuisson supérieure ; et
une soufflante d'air inférieure (44) configurée pour envoyer de l'air chauffé vers la chambre de cuisson inférieure.

2. Four de cuisson de la revendication 1, comprenant en outre :
un déflecteur d'air supérieur (45) positionné devant une sortie de la soufflante d'air supérieure et conçu pour diriger une partie de l'air chauffé de la soufflante d'air supérieure dans le plénum d'air supérieur par le canal d'air supérieur ; et
un déflecteur d'air inférieur (45) positionné devant une sortie de la soufflante d'air inférieure et conçu pour diriger une partie de l'air chauffé de la soufflante d'air inférieure dans le plénum d'air inférieur par le canal d'air inférieur ;
une distance entre le déflecteur d'air supérieur et la sortie de la soufflante d'air supérieure étant éventuellement réglable ;
une distance entre le déflecteur d'air inférieur et la sortie de la soufflante d'air inférieure étant éventuellement réglable.

3. Four de cuisson de la revendication 2, dans lequel au moins l'un du déflecteur d'air supérieur et du déflecteur d'air inférieur comprend deux éléments plans sensiblement identiques (45x, 45y) joints le long d'un côté le plus proche de la sortie de celle correspondante de la soufflante d'air supérieure et de la soufflante d'air inférieure selon un certain angle pour former une forme de « > » sensiblement symétrique, vue depuis le côté.

4. Four de cuisson de la revendication 3, dans lequel une pointe du déflecteur d'air en forme de « > » pointe vers le centre vertical de la sortie de celle correspondante de la soufflante d'air supérieure et de la soufflante d'air inférieure.

5. Four de cuisson de la revendication 3, dans lequel la distance entre le côté le plus proche du déflecteur d'air en forme de « > » et la sortie de celle correspondante de la soufflante d'air supérieure et de la soufflante d'air inférieure est sensiblement de 6,1 cm (2,4 pouces).

6. Four de cuisson de la revendication 3, dans lequel l'angle entre les deux éléments plans (45x, 45y) est fixe ou réglable ; et/ou
dans lequel l'angle entre les deux éléments plans est compris entre 65 degrés et 70 degrés ; et/ou
dans lequel chacun des deux éléments plan est sensiblement en forme de trapézoïde isocèle.

7. Four de cuisson de la revendication 1, dans lequel au moins l'un du plénum d'air supérieur et du plénum d'air inférieur comprend une première surface (34) et une deuxième surface (35) opposée à la première surface, la première surface comprenant une surface plane plate ayant la pluralité d'évents d'air (32) et la deuxième surface étant inclinée vers la première surface de sorte que l'espacement vertical entre la première surface et la deuxième surface au niveau du bord d'admission d'air (31) du plénum d'air soit plus grand que l'espacement vertical entre la première surface et la deuxième surface au niveau d'une extrémité distale du plénum d'air ;
l'espacement vertical entre la première surface et la deuxième surface au niveau du bord d'admission d'air du plénum d'air étant éventuellement sensiblement de 2,54 cm (un pouce) ;
la deuxième surface étant éventuellement inclinée selon un angle plus grand au niveau du bord d'admission d'air que près de l'extrémité distale ;
la deuxième surface comprenant éventuellement au moins deux éléments plans qui sont inclinés vers la première surface selon des angles différents ;
la deuxième surface étant éventuellement inclinée à 4,5 degrés au niveau du bord d'admission d'air et à 1,0 degré au niveau de l'extrémité distale.

8. Four de cuisson de la revendication 1, dans lequel le canal d'air supérieur et le canal d'air inférieur sont situés sur une paroi arrière (23) de la cavité de four.

9. Four de cuisson de la revendication 1, dans lequel chacun du canal d'air supérieur et du canal d'air inférieur peut être recouvert par un battant (26yc, 27xc, 28yc, 29xc) s'il n'est pas raccordé à celui correspondant du plénum d'air supérieur et du plénum d'air inférieur.

10. Four de cuisson de la revendication 9, dans lequel chacun du plénum d'air supérieur et du plénum d'air inférieur comprend une patte (33) conçue pour ouvrir le battant lorsqu'il est raccordé à celui correspondant du canal d'air supérieur et du canal d'air inférieur.

11. Four de cuisson de la revendication 1, comprenant en outre un panneau de commande (18) destiné à commander séparément et indépendamment la chambre de cuisson supérieure et la chambre de cuisson inférieure.

12. Four de cuisson de la revendication 1, comprenant en outre un capteur destiné à détecter que la porte de four est restée ouverte au cours d'un cycle de cuisson ;
le four de cuisson comprenant éventuellement en outre un dispositif de commande pour régler à nouveau un paramètre de cuisson pour au moins l'une de la chambre de cuisson supérieure et de la chambre de cuisson inférieure sur la base de la quantité de temps pendant laquelle la porte de four est restée ouverte au cours du cycle de cuisson.

13. Four de cuisson de la revendication 1, dans lequel le plénum d'air supérieur est conçu pour supporter un rayonnage alimentaire pour la chambre de cuisson supérieure.

14. Four de cuisson de la revendication 1, comprenant en outre des ouverture de renvoi d'air (48) sur des parois latérales gauche et droite de la cavité de four.

15. Four de cuisson de la revendication 1, comprenant en outre :
un battant mobile supérieur (126yc) destiné à recouvrir le canal d'air supérieur ;
un battant mobile inférieur (127xc) destiné à recouvrir le canal d'air inférieur ;
une tige (101) ; et
une bride (102) attachée à la tige au niveau d'une extrémité avant et couplée au battant mobile supérieur et au battant mobile inférieur au niveau d'une extrémité arrière par le biais d'au moins un pivot (106, 108),
la tige et la bride formant un ensemble mobile qui est capable de tirer le battant mobile supérieur et le battant mobile inférieur au-dessus du canal d'air supérieur et du canal d'air inférieur et de pousser le battant mobile supérieur et le battant mobile inférieur en éloignement du canal d'air supérieur et du canal d'air inférieur en se déplaçant vers l'arrière et vers l'avant, respectivement.
